# FASCICULE DE BREVET EUROPEEN

(11) **EP 4 207 472 B1**
(45) Date de publication et mention de la délivrance du brevet: **31.12.2025**
(21) Numéro de dépôt: 21306954.5
(22) Date de dépôt: 29.12.2021
(51) Int. Cl.: H01M 50/502, H01M 50/512, H01M 50/522

(54) **ENSEMBLE ET PROCÉDÉ D'INTERCONNEXION ÉLECTRIQUE**
ANORDNUNG UND VERFAHREN ZUR ELEKTRISCHEN VERBINDUNG
ASSEMBLY AND METHOD FOR ELECTRICAL INTERCONNECTION

(43) Date de publication de la demande: 05.07.2023
(73) Titulaire: Automotive Cells Company SE, 33520 Bruges (FR)
(72) Inventeur: DE ROLAND, Geoffroy, 33520 BRUGES (FR); QUEYRENS, Mathieu, 33910 SAINT-DENIS-DE-PILE (FR); LAATIAOUI, Najib, 33130 BEGLES (FR)
(74) Mandataire: Lavoix

(56) Documents cités:
- US-A1- 2007 111 088
- US-A1- 2020 067 059

## Description

La présente invention concerne un ensemble d'interconnexion électrique d'un système de batterie, en particulier pour un véhicule au moins partiellement alimenté par batterie électrique.

L'invention s'applique en particulier à la réalisation d'une batterie, notamment de véhicule électrique. On entend par « batterie » une pluralité de cellules électrochimiques reliées électriquement les unes aux autres. Selon un exemple particulier de batterie, la pluralité de cellules électrochimiques est agencée sous la forme d'un ou plusieurs module(s) de batterie, chaque module de batterie comprenant plusieurs cellules électrochimiques raccordées électriquement les unes aux autres et assemblées mécaniquement les unes aux autres par un système d'assemblage, tel que des plaques d'assemblage. Une cellule électrochimique comprend, en particulier, un empilement d'électrodes positives reliées les unes aux autres et un empilement d'électrodes négatives reliées les unes aux autres, séparées par un séparateur, connu sous le terme de « stack ». Les électrodes positives reliées les unes aux autres forment une borne positive, et les électrodes négatives reliées les unes aux autres forment une borne négative.

Pour la transmission électrique entre deux modules de batterie, il est connu de connecter électriquement et mécaniquement une pièce de connexion entre les deux modules.

Par exemple, la pièce de connexion est divisée en deux parties et chacune des deux parties est soudée à l'un des deux modules de batterie, de sorte à relier électriquement les deux modules de batterie.

US 2007/111088 A1 décrit une telle pièce de connexion.Cependant, une telle pièce de connexion n'apporte pas entière satisfaction.

En effet, une telle connexion ne peut être démontée qu'en détruisant la pièce de connexion, ce qui réduit la modularité de connexion entre les modules. En outre, un tel démontage peut ainsi endommager l'un des modules de batterie.

US 2020/067059 A1 décrit une pièce de connexion pour l'assemblage de deux cellules électrochimiques ultrafines sans soudure.

De plus, la pièce de connexion est généralement fixée, dans un premier temps, sur l'un des modules de batterie, puis fixée, dans un deuxième temps, sur l'autre des modules de batterie, par exemple sur une ligne de production différente.

Le module de batterie sur lequel est déjà fixée la pièce de connexion doit ainsi être transporté avec la pièce de connexion dépassant en saillie de l'un des bords dudit module de batterie. Le volume à transporter s'en trouve donc augmenté, ce qui présente des désavantages économiques. De plus, la pièce de connexion risque d'être endommagée pendant le transport.

Un des buts de l'invention est de pallier ces inconvénients en proposant un ensemble d'interconnexion électrique autorisant une connexion modulaire des composants électriques d'un système de batterie électrique, tout en restant simple et peu encombrante.

A cet effet, l'invention a pour objet un ensemble d'interconnexion selon la revendication 1.

Selon des modes particuliers de réalisation, l'ensemble comprend l'une ou plusieurs des caractéristiques optionnelles suivantes, correspondant aux revendications 2 à 12 prise(s) isolément ou selon toutes les combinaisons techniquement possibles.

L'invention a aussi pour objet un procédé de connexion électrique selon la revendication 13.

L'invention sera mieux comprise à la lecture de la description qui va suivre, donnée uniquement à titre d'exemple non limitatif, et faite en se référant aux dessins annexés, sur lesquels :
- la figure 1 est une vue schématique en perspective d'un ensemble d'interconnexion selon un premier mode de réalisation de l'invention, la pièce de connexion étant en position pliée;
- la figure 2 est une vue schématique en perspective de l'ensemble d'interconnexion représenté sur la figure 1, la pièce de connexion étant en position dépliée;
- la figure 3 est une vue en coupe selon un plan de coupe vertical de la pièce de connexion représentée sur la figure 1;
- la figure 4 est une vue schématique en perspective d'un ensemble d'interconnexion selon un deuxième mode de réalisation de l'invention;
- la figure 5 est une vue centrée sur la pièce de connexion de l'ensemble d'interconnexion représenté sur la figure 4;
- la figure 6 est une vue schématique en perspective d'un ensemble selon un troisième mode de réalisation de l'invention; et
- la figure 7 est une vue centrée sur la pièce de connexion de l'ensemble d'interconnexion représenté sur la figure 6.

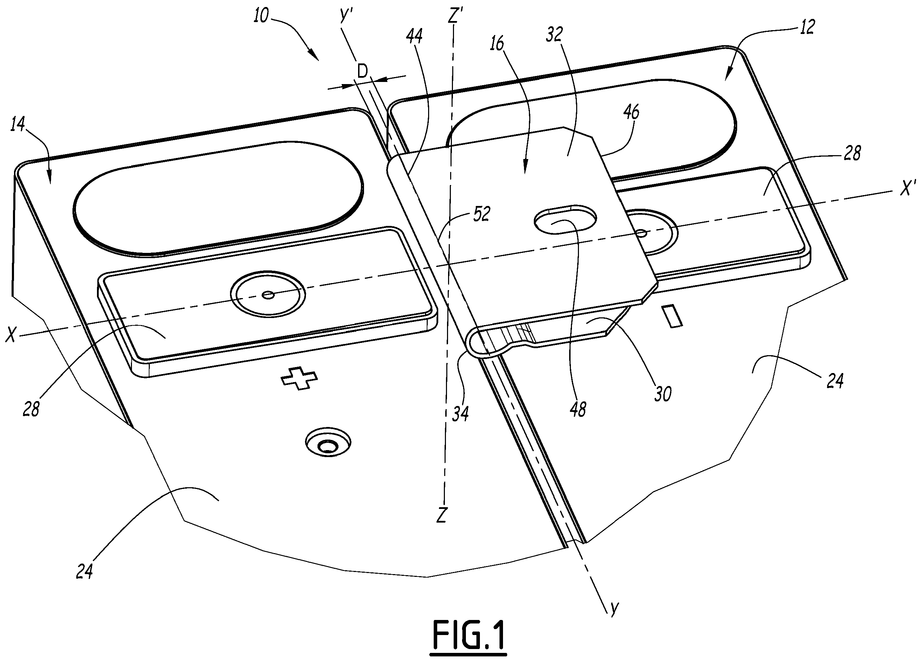

En référence aux figures 1 à 3, on décrit un ensemble d'interconnexion 10 selon un premier mode de réalisation de l'invention.

L'ensemble d'interconnexion 10 comprend un premier composant 12 électrique, un deuxième composant 14 électrique et une première pièce de connexion 16 destinée à permettre une connexion électrique entre le premier composant 12 et le deuxième composant 14.

Chacun du premier composant 12 et du deuxième composant 14 sont des composants électriques d'un système de batterie de véhicule destiné à équiper un véhicule au moins partiellement alimenté en énergie de propulsion par batterie électrique.

Le premier composant 12 est une cellule électrochimique ou un module de batterie comprenant une cellule électrochimique ou plusieurs cellules électrochimiques reliées électriquement entre elles et assemblées mécaniquement les unes aux autres.

Le deuxième composant 14 est par exemple une cellule électrochimique, un module de batterie comprenant une cellule électrochimiques ou plusieurs cellules électrochimiques reliées électriquement entre elles et assemblées mécaniquement les unes aux autres par un système d'assemblage, une barre d'interconnexion (ou barre du bus ou encore « busbar » selon la terminologie anglaise), une carte électronique de contrôle d'un système de batterie ou tout autre composant électronique d'un système de batterie.

Dans un exemple particulier illustré sur la Figure 1, le premier composant 12 et le deuxième composant 14 sont deux modules de batterie et la pièce de connexion 16 est configurée pour le connexion électrique de ces deux modules de batterie.

Le premier composant 12 et le deuxième composant 14 formés de modules de batterie, comprennent chacun au moins une cellule électrochimique (non visibles), et en particulier une pluralité de cellules électrochimiques connectées électriquement entre elles et assemblées mécaniquement.

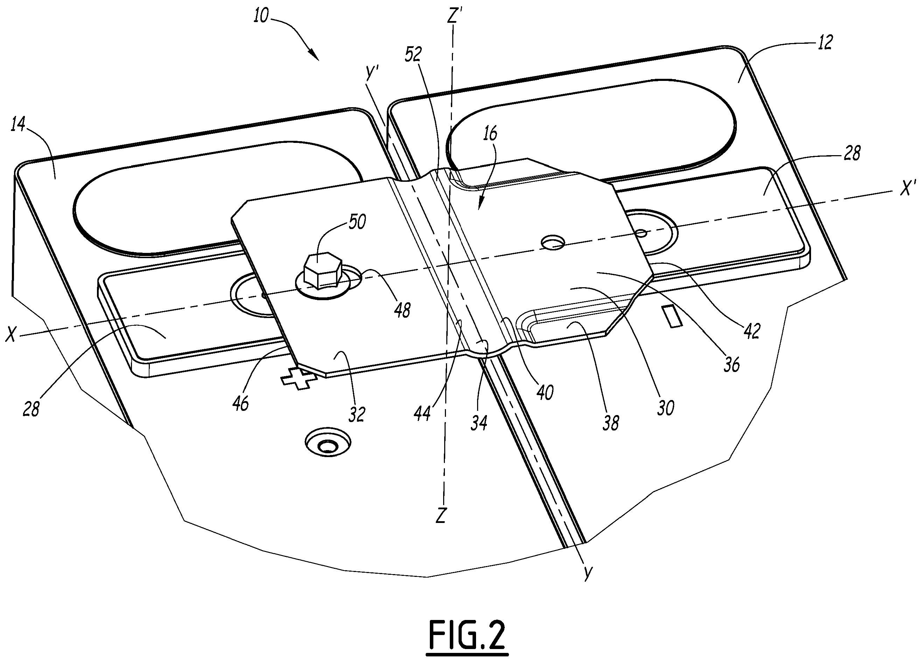

Comme illustré sur les figures 1 et 2, de manière générale, chacun du premier composant 12 et du deuxième composant 14 comprend au moins une borne de connexion électrique 28.

La borne de connexion électrique 28 du premier composant 12 et la borne de connexion électrique 28 du deuxième composant 14 sont espacées l'une de l'autre selon une direction de connexion X-X'.

De préférence, la borne de connexion électrique 28 du premier composant 12 et la borne de connexion électrique 28 du deuxième composant 14 s'étendent dans le prolongement l'une de l'autre selon la direction de connexion X-X'.

Le premier composant 12 et le deuxième composant 14 sont, par exemple, agencés l'un à côté de l'autre selon la direction de connexion X-X'.

Dans un exemple de réalisation particulier, et notamment lorsque le deuxième composant 14 est aussi une cellule électrochimique ou un module de batterie, chacun du premier composant 12 et du deuxième composant 14définit une face supérieure 24 et une face inférieure (non visible) opposées l'une de l'autre selon une direction Z-Z' perpendiculaire à la direction de connexion X-X', la direction Z-Z' étant par exemple verticale.

Les faces supérieures 24 du premier composant 12 et du deuxième composant 14 s'étendent parallèlement l'une à l'autre et sont espacées selon la direction de connexion X-X' par une distance D, mesurée selon la direction de connexion X-X' et comprise par exemple entre 0 mm et 50 mm.

Dans un exemple de réalisation, lorsque le deuxième composant 14 est aussi une cellule électrochimique ou un module de batterie, la borne de connexion électrique 28 de chacun du premier composant 12 et du deuxième composant 14 est par exemple agencée sur la face supérieure 24 du composant 12, 14 correspondant.

En variante, la borne de connexion électrique 28 du premier composant 12 est située sur un côté du premier composant 12 et/ou la borne de connexion électrique 28 du deuxième composant 14, en particulier s'il est formé d'une cellule électrochimique ou d'un module de batterie, est située sur un côté du deuxième composant 14

La borne de connexion électrique 28 de chacun du premier composant 12 et du deuxième composant 14 est une zone autorisant une circulation d'un courant électrique.

La borne de connexion électrique 28 du premier composant 12 et la borne de connexion électrique du deuxième composant 14 permettent une circulation du courant entre le premier composant 12 et le deuxième composant 14 lorsqu'elles sont connectées électriquement entre elles.

La première pièce de connexion 16 comprend une première portion de fixation 30, une deuxième portion de fixation 32 et une portion de liaison 34 reliant mécaniquement et électriquement la première portion de fixation 30 et la deuxième portion de fixation 32.

La première portion de fixation 30, la deuxième portion de fixation 32 et la portion de liaison 34 sont de préférence venues de matière, c'est-à-dire réalisées intégralement en une seule pièce de matière.

La première pièce de connexion 16 est avantageusement composée d'un matériau possédant une bonne conductivité électrique, i.e. une conductivité électrique σ égale ou supérieure à 7.10⁶ S.m⁻¹ (siemens par mètre). Le matériau bon conducteur d'électricité est de préférence de l'aluminium ou du cuivre.

La première portion de fixation 30 est connectée mécaniquement au premier composant 12 et électriquement à la borne de connexion électrique 28 du premier composant 12.

A cet effet, la première portion de fixation 30 est de préférence soudée sur le premier composant 12.

En particulier, la première portion de fixation 30 est par exemple soudée sur la borne de connexion électrique 28 du premier composant 12. Ceci assure une connexion électrique de la première portion de fixation 30 sur la borne de connexion électrique 28 du premier composant 12 et un assemblage mécanique de la première portion de fixation 30 sur le premier composant 12.

Comme cela est visible sur la figure 2, la première portion de fixation 30 comprend, par exemple, une partie centrale 36 et deux parties latérales 38 s'étendant de part et d'autre de la partie centrale 36 selon une direction transversale Y-Y' perpendiculaire à la direction de connexion X-X'.

La partie centrale 36 est en contact direct avec la borne de connexion électrique 28 du premier composant 12 et assure la connexion électrique entre la première pièce de connexion 16 et le premier composant 12.

La partie centrale 36 est en particulier soudée sur la borne de connexion électrique 28 du premier composant 12.

Chaque partie latérale 38 est optionnellement configurée pour assurer un maintien mécanique de la première portion de fixation 30 sur la borne de connexion électrique 28 du premier composant 12, par exemple un calage suivant la direction transversale Y-Y'.

La première portion de fixation 30 comprend, par exemple, un premier bord transversal 40 lié à la portion de liaison 34 et un deuxième bord transversal 42 opposé au premier bord transversal 40 selon la direction de connexion X-X'.

Optionnellement, le deuxième bord transversal 42 est biseauté en une ou chacune de ses extrémités transversales. Ceci peut servir de détrompeur lors d'opérations d'assemblage par exemple.

Comme cela est visible sur la figure 2, la deuxième portion de fixation 32 a par exemple une forme sensiblement rectangulaire.

La deuxième portion de fixation 32 comprend, par exemple, un premier bord transversal 44 lié à la portion de liaison 34 et un deuxième bord transversal 46 opposé au premier bord transversal 44 selon la direction de connexion X-X'.

Optionnellement, le deuxième bord transversal 46 est biseauté en une ou chacune de ses extrémités transversales. Ceci peut servir de détrompeur lors d'opération d'assemblage par exemple.

Selon un mode de réalisation particulier de l'invention illustré sur les figures 1 et 2, la deuxième portion de fixation 32 définit un orifice de fixation 48, de préférence de forme oblongue selon la direction de connexion X-X'.

Comme illustré sur la figure 2, l'orifice de fixation 48 permet la fixation mécanique de la deuxième portion de fixation 32 sur la borne de connexion électrique 28 du deuxième composant 14, par exemple à l'aide d'un organe de fixation allongé, tel qu'une vis, ou boulon ou un rivet, inséré au travers de l'orifice de fixation 48.

Sur la figure 2, la deuxième portion de fixation 32 est fixée sur la borne de connexion électrique 28 du deuxième composant 14 à l'aide d'une vis 50 reçue dans l'orifice de fixation 48 pour connecter mécaniquement la deuxième portion de fixation 32 au deuxième composant 12, comme illustré sur la figure 2.

En complément facultatif ou en variante, la deuxième portion de fixation 32 peut être fixée sur la borne de connexion électrique 28 du deuxième composant 14 par d'autres moyens, comme cela sera indiqué par la suite.

La portion de liaison 34 de la première pièce de connexion 16 s'étend entre la première portion de fixation 30 et la deuxième portion de fixation 32, et plus particulièrement entre le premier bord transversal 40 de la première portion de fixation 30 et le premier bord transversal 44 de la deuxième portion de fixation 32.

Comme illustré sur les figures 1 et 2, la portion de liaison 34 est par exemple délimitée par deux plis transversaux 52. Chacun des deux plis transversaux 52 relie la portion de liaison 34 respectivement avec la première portion de fixation 30 et la deuxième portion de fixation 32, et s'étend respectivement selon le premier bord transversal 40 de la première portion de fixation 30 et selon le premier bord transversal 44 de la deuxième portion de fixation 32.

La portion de liaison 34 est avantageusement plus souple que la première portion de fixation 30 et que la deuxième portion de fixation 32 en flexion autour de la direction transversale Y-Y'.

La portion de liaison 34 présente une raideur angulaire autour de la direction transversale Y-Y' strictement plus élevée que celle de chacune de la première postion de connexion 30 et la deuxième portion de connexion 32.

La portion de liaison 34 est une zone préférentielle de pliage de la première pièce de connexion 16 autour de la direction transversale Y-Y'. Lors d'un pliage de la première pièce de connexion 16 autour de la direction transversale Y-Y', la première pièce de connexion 16 tend à se plier préférentiellement dans sa portion de liaison 34.

Grâce à la souplesse en flexion autour de la direction transversale Y-Y' de la portion de liaison 34 plus élevée que celle de chacune de la première portion de fixation 30 et de la deuxième portion de fixation 32, la première pièce de connexion 16 est mobile par rapport au premier composant 12 entre une position pliée (représentée sur la figure 1) et une position dépliée (représentée sur la figure 2) par pliage, ou réciproquement par dépliage, de la portion de liaison 34 autour de la direction transversale Y-Y'.

Par exemple, le pliage, réciproquement le dépliage, de la portion de liaison 34 est réalisé par pliage, réciproquement dépliage, de chacun des plis transversaux 52 autour de la direction transversale Y-Y'.

Avantageusement, le pliage, réciproquement le dépliage, de la portion de liaison 34 autour de la direction transversale Y-Y' est réalisable manuellement par un opérateur.

Plus particulièrement, le pliage de la portion de liaison 34 nécessite un effort de pliage compris entre 0,1 daN et 10 daN, en particulier entre 1daN et 5daN, en particulier entre 2 daN et 4 daN.

En outre, la première pièce de connexion 16 est avantageusement conçue de sorte à autoriser au moins 10 pliages, réciproquement dépliages, de la portion de liaison 34, sans casser.

Dans la position pliée comme illustré sur la figure 1, la deuxième portion de fixation 32 s'étend du côté de la première portion de fixation 30 par rapport à la portion de liaison 34 dans la direction de connexion X-X'. La deuxième portion de fixation 32 s'étend, par exemple, sensiblement au-dessus de la première portion de fixation 30 selon la direction Z-Z'.

Avantageusement, en position pliée, les deux plis transversaux 52 de la portion de liaison 34 s'étendent sensiblement l'un au-dessus de l'autre.

En variante, la deuxième portion de fixation 32 en position pliée s'étend sensiblement perpendiculairement à la première portion de fixation 30.

De préférence, en position pliée, la deuxième portion de fixation 32 est apte à prendre chacune des positions entre la position illustrée sur la figure 1 dans laquelle elle s'étend au-dessus de la première portion de fixation 30 et entre la position dans laquelle elle s'étend perpendiculairement à la première portion de fixation 30.

En position pliée, la portion de liaison 34 a, de préférence, une forme arquée entre les deux plis transversaux 52. Elle définit ainsi une gouttière s'étendant entre les deux plis transversaux 52 suivant la direction Z-Z'.

En position pliée, la deuxième portion de fixation 32 n'est pas en contact avec le deuxième composant 14. La deuxième portion de fixation 32 est alors déconnectée mécaniquement et électriquement du deuxième composant 14.

En position pliée, la première pièce de connexion 16 n'est donc en position pour relier électriquement le premier composant 12 et le deuxième composant 14.

Dans la position dépliée comme illustré sur la figure 2, la deuxième portion de fixation 32 s'étend dans le prolongement de la première portion de fixation 30 selon la direction de connexion X-X'.

En position dépliée, la portion de liaison 34 s'étend avantageusement entre le premier composant 12 et le deuxième composant 14. La portion de liaison 34 conserve, de préférence, une forme arquée entre les deux plis transversaux 52. La portion de liaison 34 définit ainsi une gouttière s'étendant entre les deux plis transversaux 52 suivant la direction de connexion X-X'.

En position dépliée, la deuxième portion de fixation 32 est apte à venir en contact avec le deuxième composant 14, et plus particulièrement avec la borne de connexion électrique 28 du deuxième composant 14.

La deuxième portion de fixation 32 est ainsi adaptée pour être connectée mécaniquement au deuxième composant 14 et électriquement à la borne de connexion électrique 28 du deuxième composant 14.

De préférence, dans la position dépliée, la deuxième portion de fixation 32 est apte à être connectée mécaniquement de manière amovible au deuxième composant 14.

A cet effet, un organe de fixation tel qu'une vis 50 est avantageusement insérée dans l'orifice de fixation 48 pour connecter mécaniquement la deuxième portion de fixation 32 au deuxième composant 14, comme illustré sur la figure 2.

En variante, la deuxième portion de fixation 32 est encliquetée ou collée sur le deuxième composant 14.

Chacune de la première portion de fixation 30 et la deuxième portion de fixation 32 est par exemple sensiblement plane et s'étend entre deux plans horizontaux.

La première portion de fixation 30 et la deuxième portion de fixation 32 ont avantageusement une épaisseur sensiblement identique. Par épaisseur, on entend la distance mesurée selon la direction Z-Z' entre les deux plans horizontaux correspondants. L'épaisseur de chacune de la première portion de fixation 30 et de la deuxième portion de fixation 32 est par exemple comprise entre 0,5 mm et 5 mm.

Dans un exemple de réalisation, la première pièce de connexion 16 est une plaque qui est mise en forme.

L'expression « mise en forme » désigne les procédés de mise en forme des matériaux, incluant les procédés de mise en forme avec enlèvement de matière, tels que l'usinage et le découpage, et les procédés de mise en forme sans enlèvement de matière, tel que l'emboutissage, le formage et le poinçonnage.

La portion de liaison 34 est par exemple fabriquée par emboutissage de la plaque et pré-pliage des deux plis 52 transversaux, par exemple à l'aide d'un poinçon.

Optionnellement, la portion de liaison 34 présente une épaisseur inférieure à l'épaisseur de chacune de la première portion de fixation 30 et de la deuxième portion de fixation 32.

Ceci permet de conférer à la portion de liaison 34 une raideur angulaire autour de la direction transversale Y-Y' strictement inférieure à celles de la première portion de fixation 30 et de la deuxième portion de fixation 32.

Une portion de liaison 34 d'épaisseur inférieure est par exemple obtenue par mise en forme de la première pièce de connexion 16, par exemple par écrasement de la portion de liaison 34.

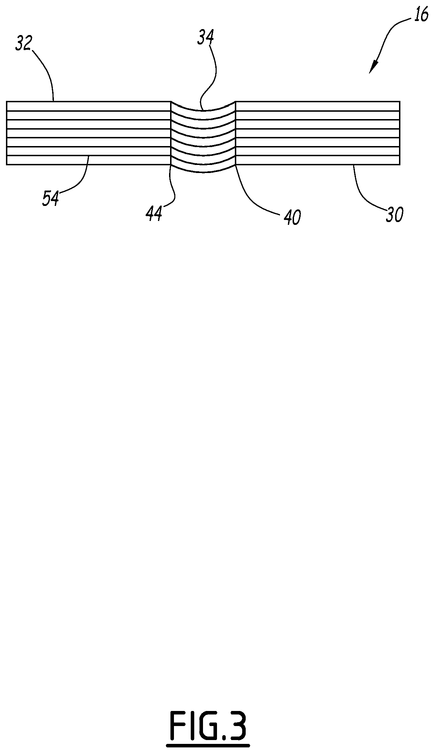

Comme illustré sur la figure 3, dans un exemple de réalisation, la première pièce de connexion 16 comprend un empilement d'une pluralité de couches 54, avantageusement entre 2 et 20 couches.

Les couches 54 sont de préférence des feuilles métalliques, et plus particulièrement des feuilles d'aluminium ou des feuilles de cuivre.

Dans chacune de la première portion de fixation 30 et de la deuxième portion de fixation 32, les couches 54 sont fixées les unes sur les autres, par exemple par collage ou par soudure.

Dans la portion de liaison 34, les couches 54 sont libres de glisser les unes par rapport aux autres, facilitant ainsi le pliage, réciproquement le dépliage, de la portion de liaison 34.

Dans un tel cas, la portion de liaison 34 peut présenter une épaisseur supérieure à celles de la première portion de fixation 30 et la deuxième portion de fixation 32, du fait que la première portion de fixation 30 et de la deuxième portion de fixation 32 sont par exemple écrasées et/ou chauffées pour être rigidifiées et/ou du fait de la présence d'air entre les couches 54 dans la portion de liaison 34, la portion de liaison 34 présentant néanmoins une souplesse supérieure à celles de la première portion de fixation 30 et la deuxième portion de fixation 32 pour le pliage/dépliage de la première pièce de connexion 16.

Le fonctionnement de l'ensemble d'interconnexion 10 va maintenant être décrit. Ce fonctionnement illustre un procédé de connexion électrique selon l'invention.

Tout d'abord, un ensemble d'interconnexion10 tel que décrit précédemment est fourni. La première pièce de connexion 16 est en position pliée, tel qu'illustré sur la figure 1.

La première pièce de connexion 16 est ensuite déplacée de la position pliée à la position dépliée.

De préférence, un opérateur déplie manuellement la première pièce de connexion 16.

La deuxième portion de fixation 32 est ensuite connectée mécaniquement sur le deuxième composant 14 et connectée électriquement à la borne de connexion électrique 28 du deuxième composant 14.

A cet effet, dans l'exemple illustré, la vis 50 est reçue dans l'orifice de fixation 48 pour connecter mécaniquement la deuxième portion de fixation 32 au deuxième composant 12, comme illustré sur la figure 2.

En variante, la deuxième portion de fixation 32 est encliquetée ou collée sur le deuxième composant 14.

La deuxième portion de fixation 32 est ainsi en contact avec le deuxième composant 14, et plus particulièrement avec la borne de connexion électrique 28 du deuxième composant 14, ce qui autorise une connexion électrique entre la première pièce de connexion 16 et le deuxième composant 14.

La première pièce de connexion 16 relie ainsi électriquement le premier composant 12 et le deuxième composant 14, et plus particulièrement les bornes de connexion électrique 28 du premier composant 12 et du deuxième composant 14.

Plus particulièrement, la première pièce de connexion 16 autorise une circulation d'un courant électrique entre le premier composant 12 et le deuxième composant 14, et de préférence un courant basse-tension, c'est-à-dire avec une tension inférieure à 1500 volts.

Comme dans l'exemple illustré sur la figure 2, lorsque le deuxième composant 14 est aussi une cellule électrochimique ou un module de batterie, la première pièce de connexion 16 autorise une circulation d'un courant électrique de la borne de connexion électrique 28 du deuxième composant 14 vers la borne de connexion électrique du premier composant 12 ou inversement selon le chargement/déchargement des cellules électrochimiques du premier composant 12 et du deuxième composant 14.

La pièce de connexion 16 autorise ainsi une connexion électrique basse-tension entre le premier composant 12 et le deuxième composant 14.

La connexion du premier composant 12 et du deuxième composant 14, chacun formé d'une cellule électrochimique ou d'un module de batterie, par l'intermédiaire de la pièce de connexion 16 permet de relier en série les cellules électrochimiques 18 de chacun du premier composant 12 et du deuxième composant 14, afin de former une batterie, par exemple destinée à alimenter en énergie un véhicule automobile.

La pièce de connexion 16 permet une connexion modulaire du premier composant 12 et du deuxième composant 14.

En effet, par la connexion mécanique amovible de la pièce de connexion 16 sur le deuxième composant 14, la pièce de connexion 16 peut être facilement déconnectée du deuxième composant 14, sans endommager les éléments connexes, tels que la borne de connexion électrique 28. Le premier composant 12 peut ensuite être reconnecté facilement à un autre composant distinct du deuxième composant 14 par l'intermédiaire de la même pièce de connexion 16.

De plus, la pièce de connexion 16 en position pliée peut être transportée sur le premier composant 12 de manière peu encombrante. De plus, un transport en position pliée réduit les risques d'endommagement de la pièce de connexion 16.

En outre, l'ensemble 10 est simple d'utilisation, notamment grâce au pliage, réciproquement dépliage, manuel de la pièce de connexion 16.

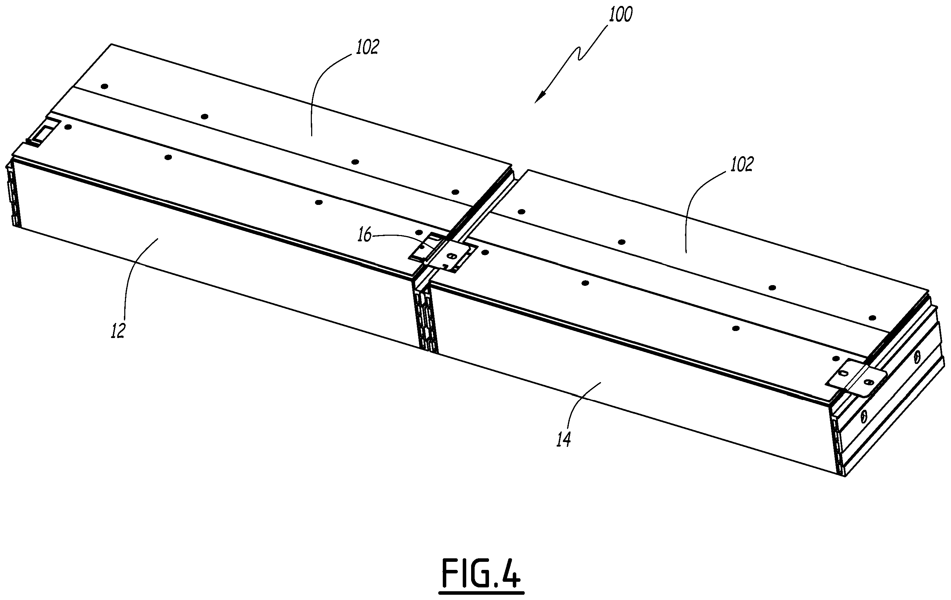

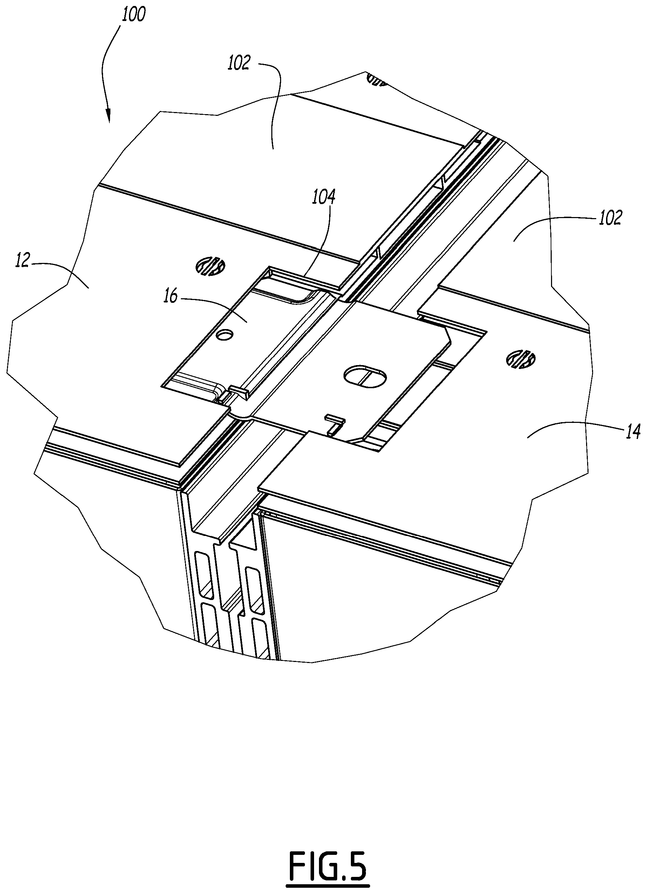

En référence aux figures 4 et 5, on décrit un ensemble d'interconnexion100 selon un deuxième mode de réalisation de l'invention. L'ensemble d'interconnexion 100 est analogue à l'ensemble d'interconnexion 10 représenté sur les figures 1 et 2. Les éléments similaires portent les mêmes références numériques et ne seront pas décrits à nouveau. Seules les différences seront décrites en détail ci-après.

Le premier composant 12 et le deuxième composant 14 sont chacun une cellule électrochimique ou un module de batterie, et comprennent chacun au moins une cellule électrochimique 18.

Au moins un parmi le premier composant 12 et le deuxième composant 14 comprend au moins deux cellules électrochimiques 18.

De préférence, chacun du premier composant 12 et du deuxième composant 14 est un module de batterie comprenant une pluralité de cellules électrochimiques 18.

Chacun du premier composant 12 et du deuxième composant 14 comprend un boitier 102, dans lequel est logée chacune des cellules électrochimiques 18. Les cellules électrochimiques 18 sont connectées entre elles électriquement à l'intérieur du boitier 102.

Chaque boitier 102 définit une encoche 104 donnant accès à la borne de connexion électrique 28 du premier composant 12, respectivement du deuxième module 14.

Pour connecter électriquement le premier composant 12 et le deuxième composant 14, la pièce de connexion 16 s'étend entre les encoches 104 des boitiers 102 de chacun des composants 12, 14.

Les cellules électrochimiques 18 du premier composant 12 et du deuxième composant 14 peuvent ainsi être reliées en série, par l'intermédiaire de la pièce de connexion 16.

Chaque composant 12, 14 comprend avantageusement une pluralité de bornes de connexion électrique 28. Chaque borne de connexion électrique 28 du premier composant 12 est apte à être reliée électriquement avec une borne de connexion électrique 28 correspondante de deuxième composant 14 par une pièce de connexion 16 tel que décrit précédemment.

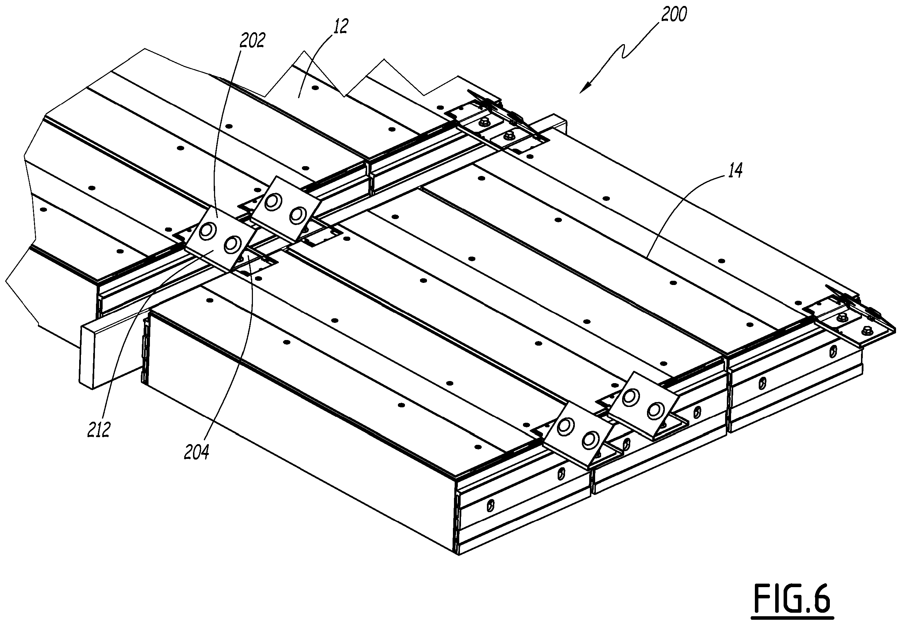

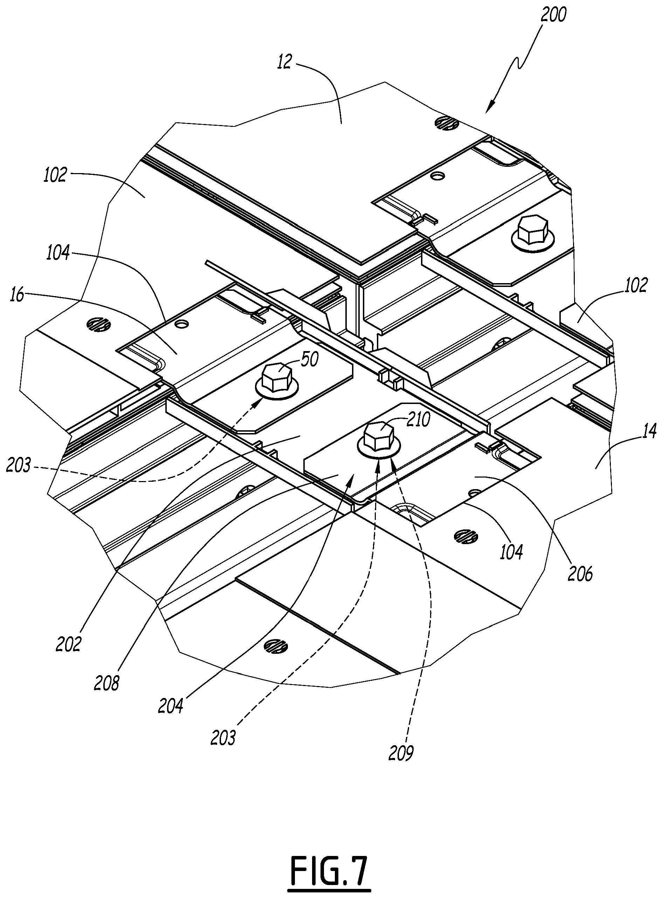

En référence aux figures 6 et 7, on décrit un ensemble 200 selon un troisième mode de réalisation de l'invention. L'ensemble 200 est analogue à l'ensemble 100 représenté sur les figures 4 et 5. Les éléments similaires portent les mêmes références numériques et ne seront pas décrits à nouveau. Seules les différences seront décrites en détail ci-après.

Le premier composant 12 et le deuxième composant 14 sont chacun une cellule életrochimique ou un module de module de batterie comprenant une ou plusieurs cellules électrochimiques 18.

Le deuxième composant 14 comprend, en outre, une pièce d'interface 202 et une deuxième pièce de connexion 204.

La pièce d'interface 202 est, par exemple, une plaque s'étendant entre le premier composant 12 et le deuxième composant 14.

La pièce d'interface 202 est, avantageusement, composée d'un matériau possédant une bonne conductivité électrique, i.e. une conductivité électrique σ égale ou supérieure à 7.10⁶ S.m⁻¹ (siemens par mètre). Le matériau bon conducteur d'électricité est de préférence de l'aluminium ou du cuivre.

La pièce d'interface 202 comprend, de préférence, deux orifices de fixation 203 (non-visibles sur la figure 7).

La pièce d'interface 202 est apte à être connectée mécaniquement et électriquement à la deuxième portion de fixation 32 de la première pièce de connexion 16 dans la position dépliée.

Par exemple, une vis 50 est reçue dans l'orifice de fixation 48 de la deuxième portion de fixation 32 et dans l'un des orifices de fixation 203 de la pièce d'interface 202 pour connecter mécaniquement la deuxième portion de fixation 32 à la pièce d'interface 202.

La deuxième pièce de connexion 204 comprend une première portion de fixation 206 et une deuxième portion de fixation 208.

La première portion de fixation 206 est connectée mécaniquement au deuxième composant 14 et électriquement à la borne de connexion électrique 28 du deuxième composant 14.

Par exemple, la première portion de fixation 206 est soudée sur le deuxième composant 14.

La deuxième portion de fixation 208 est connectée mécaniquement et électriquement à la pièce d'interface 202.

Par exemple, la deuxième portion de fixation 208 comprend un orifice de fixation 209 (non-visible sur la figure 7) et une vis 210. La vis 210 est avantageusement reçue dans l'orifice de fixation 209 de la deuxième portion de fixation 208 et dans l'un des orifices de fixation 203 de la pièce d'interface 202, de sorte à fixer la deuxième pièce de connexion 204 sur la pièce d'interface 202.

De préférence, la deuxième pièce de connexion 204 est sensiblement analogue à la première pièce de connexion 16. La deuxième pièce de connexion 204 comprend ainsi une portion de liaison 210 autorisant un pliage, réciproquement un dépliage, de la deuxième pièce de connexion 204.

Optionnellement, la pièce d'interface 202 comprend un capot 212 mobile entre une position ouverte (illustrée sur la figure 6) et une position fermée.

Le capot 212 dans la position ouverte autorise le montage, réciproquement le démontage, de la première pièce de connexion 16 et de la deuxième pièce de connexion 204 sur la pièce d'interface 202.

Le capot 212 dans la position fermée isole élctriquement la première pièce de connexion 16, la deuxième pièce de connexion 204 et la pièce d'interface 202.

Le capot 212 dans la position fermée bloque la fixation de la première pièce de connexion 16 et de la deuxième pièce de connexion 204 sur la pièce d'interface 202.Le capot 202 est de préférence réalisée en matière plastique ou en matériau composite comprenant une matrice en matière plastique renforcée par une charge et/ou par des fibres.

L'invention n'est pas limitée aux exemples de réalisation et aux variantes décrits auparavant et illustrés sur les dessins.

En particulier, le premier composant 12 est une cellule électrochimique ou un module de batterie comprenant une ou plusieurs cellules électrochimiques, le deuxième composant 14 pouvant aussi être une cellule électrochimique ou un module de batterie comprenant une ou plusieurs cellules électrochimiques ou un autre type de composant d'une batterie incluant le premier composant 12 ou plus généralement d'un système de batterie électrique comprenant une batterie incluant le premier composant 12.

En particulier le deuxième composant peut être un composant tel qu'une barre d'interconnexion (ou « busbar » selon la terminologie anglaise) ou une carte électronique de contrôle, par exemple une carte électronique de contrôle configuré pour contrôler une batterie incluant le premier composant 12.

## Revendications

1. Ensemble d'interconnexion (10, 100, 200) comprenant :
- un premier composant (12) et un deuxième composant (14), le premier composant (12) étant une cellule électrochimique (18) ou un module de batterie comprenant au moins une cellule électrochimique (18), le premier composant (12) et le deuxième composant (14) comprenant chacun au moins une borne de connexion électrique (28), la borne de connexion électrique (28) du premier composant (12) et la borne de connexion électrique (28) du deuxième composant (14) étant espacées l'une de l'autre selon une direction de connexion (X-X'),
- une première pièce de connexion (16) comprenant :
- une première portion de fixation (30) connectée mécaniquement au premier composant (12) et électriquement à la borne de connexion électrique (28) du premier composant (12),
- une deuxième portion de fixation (32), et
- une portion de liaison (34) reliant mécaniquement et électriquement la première portion de fixation (30) et la deuxième portion de fixation (32),
**caractérisé en ce que** la portion de liaison (34) de la première pièce de connexion (16) est plus souple que la première portion de fixation (30) et que la deuxième portion de fixation (32) en flexion autour d'une direction transversale (Y-Y') perpendiculaire à la direction de connexion (X-X'), la première portion de fixation (30) étant mobile par rapport au premier composant(12) entre une position pliée et une position dépliée par pliage, ou réciproquement dépliage, de la portion de liaison (34) autour de la direction transversale (Y-Y'),
la deuxième portion de fixation (32) s'étendant dans le prolongement de la première portion de fixation (30) selon la direction de connexion (X-X') dans la position dépliée, la deuxième portion de fixation (32) étant adaptée pour être connectée mécaniquement au deuxième composant (14) et électriquement à la borne de connexion électrique (28) du deuxième composant (14),
la deuxième portion de fixation (32) s'étendant du côté de la première portion de fixation (30) par rapport à la portion de liaison (34) dans la direction de connexion (X-X') dans la position pliée, la deuxième portion de fixation (32) étant déconnectée mécaniquement du deuxième composant (14) et électriquement de la borne de connexion électrique (28) du deuxième composant (14).

2. Ensemble d'interconnexion (10, 100, 200) selon la revendication 1, dans lequel la portion de liaison (34), la première portion de fixation (30) et la deuxième portion de fixation (32) sont venues de matière.

3. Ensemble d'interconnexion (10, 100, 200) selon la revendication 1 ou 2, dans lequel, dans la position dépliée, la deuxième portion de fixation (32) est connectée mécaniquement de manière amovible au deuxième composant (14).

4. Ensemble d'interconnexion (10, 100, 200) selon l'une quelconque des revendications précédentes, dans lequel la deuxième portion de fixation (32) définit un orifice de fixation (48) et comprend une vis (50) reçue dans l'orifice de fixation (48) pour connecter mécaniquement la deuxième portion de fixation (32) au deuxième composant (14).

5. Ensemble d'interconnexion (10, 100, 200) selon l'une quelconque des revendications précédentes, dans lequel la première portion de fixation (30) est soudée sur le premier composant (12).

6. Ensemble d'interconnexion (10, 100, 200) selon l'une quelconque des revendications précédentes, dans lequel la portion de liaison (34) est délimitée par deux plis transversaux (52), chacun des deux plis transversaux (52) reliant la portion de liaison (34) respectivement avec la première portion de fixation (30) et la deuxième portion de fixation (32).

7. Ensemble d'interconnexion (10, 100, 200) selon la revendication 4, dans lequel, dans la position dépliée, la portion de liaison (34) a une forme arquée entre les deux plis transversaux (52).

8. Ensemble d'interconnexion (10, 100, 200) selon l'une quelconque des revendications précédentes, dans lequel la portion de liaison (34) présente une épaisseur inférieure à l'épaisseur de chacune de la première portion de fixation (30) et de la deuxième portion de fixation (32).

9. Ensemble d'interconnexion (10, 100, 200) selon l'une quelconque des revendications précédentes, dans lequel la première pièce de connexion (16) comprend un empilement d'une pluralité de couches (54), les couches (54) étant fixées les unes sur les autres dans chacune de la première portion de fixation (30) et de la deuxième portion de fixation (32) et les couches (54) étant libres de glisser les unes par rapport aux autres dans la portion de liaison (34).

10. Ensemble d'interconnexion (10, 100, 200) selon l'une quelconque des revendications précédentes, dans lequel la première pièce de connexion (16) est composée d'un matériau possédant une conductivité électrique σ égale ou supérieure 7.10⁶ S.m⁻¹, de préférence de l'aluminium ou du cuivre.

11. Ensemble d'interconnexion (100, 200) selon l'une quelconque des revendications précédentes, dans lequel le deuxième composant (14) est une cellule électrochimique, un module de batterie comprenant une ou plusieurs cellules électrochimiques, une barre de connexion ou une carte électronique de contrôle de batterie.

12. Ensemble d'interconnexion (200) selon l'une quelconque des revendications précédentes, dans lequel le deuxième composant (14) comprend, en outre, une pièce d'interface (202) et une deuxième pièce de connexion (204), ladite deuxième pièce de connexion (204) comprenant une première portion de fixation (206) connectée mécaniquement au deuxième composant (14) et électriquement à la borne de connexion électrique (28) du deuxième composant (14) et une deuxième portion de fixation (208) connectée mécaniquement et électriquement à la pièce d'interface (202), la pièce d'interface (202) du deuxième composant (14) étant apte à être connectée mécaniquement et électriquement à la deuxième portion de fixation (32) de la première pièce de connexion (16) dans la position dépliée.

13. Procédé de connexion électrique comprenant au moins les étapes suivantes :
- fourniture d'un ensemble d'interconnexion (10, 100, 200) selon l'une quelconque des revendications précédentes, la première pièce de connexion (16) étant en position pliée,
- passage de la première pièce de connexion (16) de la position pliée à la position dépliée, et
- connexion mécanique de la deuxième portion de fixation (32) de la première pièce de connexion (16) sur le deuxième composant (14) et connexion électrique de la deuxième portion de fixation (32) de la première pièce de connexion (16) à la borne de connexion électrique (28) du deuxième composant (14).

## Patentansprüche

1. Verbindungsanordnung (10, 100, 200), umfassend:
- eine erste Komponente (12) und eine zweite Komponente (14), wobei die erste Komponente (12) eine elektrochemische Zelle (18) oder ein Batteriemodul, das mindestens eine elektrochemische Zelle (18) umfasst, ist, die erste Komponente (12) und die zweite Komponente (14) jeweils umfassend mindestens einen elektrischen Verbindungsanschluss (28), wobei der elektrische Verbindungsanschluss (28) der ersten Komponente (12) und der elektrische Verbindungsanschluss (28) der zweiten Komponente (14) entlang einer Verbindungsrichtung (X-X') voneinander beabstandet sind,
- ein erstes Verbindungsstück (16), umfassend:
- einen ersten Befestigungsabschnitt (30), der mechanisch mit der ersten Komponente (12) und elektrisch mit dem elektrischen Verbindungsanschluss (28) der ersten Komponente (12) verbunden ist,
- einen zweiten Befestigungsabschnitt (32), und
- einen Verbindungsabschnitt (34), der den ersten Befestigungsabschnitt (30) und den zweiten Befestigungsabschnitt (32) mechanisch und elektrisch miteinander verbindet,
**dadurch gekennzeichnet, dass** der Verbindungsabschnitt (34) des ersten Verbindungsstücks (16) flexibler ist als der erste Befestigungsabschnitt (30), und dass der zweite Befestigungsabschnitt (32) um eine Querrichtung (Y-Y') senkrecht zu der Verbindungsrichtung (X-X') gebogen ist, der erste Befestigungsabschnitt (30) in Bezug auf die erste Komponente(12) zwischen einer gefalteten Position und einer entfalteten Position durch Falten oder umgekehrt Entfalten des Verbindungsabschnitts (34) um die Querrichtung (Y-Y') bewegbar ist,
der zweite Befestigungsabschnitt (32) sich in der entfalteten Position in Verlängerung des ersten Befestigungsabschnitts (30) entlang der Verbindungsrichtung (X-X') erstreckt, wobei der zweite Befestigungsabschnitt (32) angepasst ist, um mechanisch mit der zweiten Komponente (14) und elektrisch mit dem elektrischen Verbindungsanschluss (28) der zweiten Komponente (14) verbunden zu sein,
der zweite Befestigungsabschnitt (32) sich in der gefalteten Position von der Seite des ersten Befestigungsabschnitts (30) in Bezug auf den Verbindungsabschnitt (34) in der Verbindungsrichtung (X-X') erstreckt, der zweite Befestigungsabschnitt (32) mechanisch von der zweiten Komponente (14) und elektrisch von dem elektrischen Verbindungsanschluss (28) der zweiten Komponente (14) getrennt ist.

2. Verbindungsanordnung (10, 100, 200) nach Anspruch 1, wobei der Verbindungsabschnitt (34), der erste Befestigungsabschnitt (30) und der zweite Befestigungsabschnitt (32) aus einem Material sind.

3. Verbindungsanordnung (10, 100, 200) nach Anspruch 1 oder 2, wobei der zweite Befestigungsabschnitt (32) in der entfalteten Position mechanisch lösbar mit der zweiten Komponente (14) verbunden ist.

4. Verbindungsanordnung (10, 100, 200) nach einem der vorherigen Ansprüche, wobei der zweite Befestigungsabschnitt (32) eine Befestigungsöffnung (48) definiert und eine Schraube (50) umfasst, die in der Befestigungsöffnung (48) aufgenommen ist, um den zweiten Befestigungsabschnitt (32) mechanisch mit der zweiten Komponente (14) zu verbinden.

5. Verbindungsanordnung (10, 100, 200) nach einem der vorherigen Ansprüche, wobei der erste Befestigungsabschnitt (30) an die erste Komponente (12) gelötet ist.

6. Verbindungsanordnung (10, 100, 200) nach einem der vorherigen Ansprüche, wobei der Verbindungsabschnitt (34) durch zwei Querfalten (52) begrenzt ist, jede der zwei Querfalten (52) den Verbindungsabschnitt (34) jeweils mit dem ersten Befestigungsabschnitt (30) und dem zweiten Befestigungsabschnitt (32) verbindet.

7. Verbindungsanordnung (10, 100, 200) nach Anspruch 4, wobei der Verbindungsabschnitt (34) in der entfalteten Position eine bogenförmige Form zwischen den zwei Querfalten (52) aufweist.

8. Verbindungsanordnung (10, 100, 200) nach einem der vorherigen Ansprüche, wobei der Verbindungsabschnitt (34) eine Stärke aufweist, die geringer ist als die Stärke von sowohl dem ersten Befestigungsabschnitt (30) als auch dem zweiten Befestigungsabschnitt (32).

9. Verbindungsanordnung (10, 100, 200) nach einem der vorherigen Ansprüche, wobei das erste Verbindungsstück (16) einen Stapel einer Vielzahl von Schichten (54) umfasst, die Schichten (54) in jedem von dem ersten Befestigungsabschnitt (30) und dem zweiten Befestigungsabschnitt (32) übereinander befestigt sind, und wobei die Schichten (54) frei sind, in dem Verbindungsabschnitt (34) in Bezug aufeinander zu gleiten.

10. Verbindungsanordnung (10, 100, 200) nach einem der vorherigen Ansprüche, wobei das erste Verbindungsstück (16) aus einem Material besteht, das eine elektrische Leitfähigkeit *σ* gleich wie oder größer als 7.10⁶ S.m⁻¹ aufweist, vorzugsweise aus Aluminium oder Kupfer.

11. Verbindungsanordnung (100, 200) nach einem der vorherigen Ansprüche, wobei die zweite Komponente (14) eine elektrochemische Zelle, ein Batteriemodul, das eine oder mehrere elektrochemische Zellen umfasst, eine Verbindungsschiene oder eine elektronische Batteriesteuerungsplatine ist.

12. Verbindungsanordnung (200) nach einem der vorherigen Ansprüche, wobei die zweite Komponente (14) ferner ein Schnittstellenstück (202) und ein zweites Verbindungsstück (204) umfasst, das zweite Verbindungsstück (204) umfassend einen ersten Befestigungsabschnitt (206), der mechanisch mit der zweiten Komponente (14) und elektrisch mit dem elektrischen Verbindungsanschluss (28) der zweiten Komponente (14) verbunden ist, und einen zweiten Befestigungsabschnitt (208), der mechanisch und elektrisch mit dem Schnittstellenstück (202) verbunden ist, wobei das Schnittstellenstück (202) der zweiten Komponente (14) geeignet ist, um in der entfalteten Position mechanisch und elektrisch mit dem zweiten Befestigungsteil (32) des ersten Verbindungsteils (16) verbunden zu sein.

13. Verfahren zum elektrischen Verbinden, umfassend mindestens die folgenden Schritte:
- Bereitstellen einer Verbindungsanordnung (10, 100, 200) nach einem der vorherigen Ansprüche, wobei das erste Verbindungsstück (16) in einer gefalteten Position ist,
- Übergang des ersten Verbindungsstücks (16) von der gefalteten Position in die entfaltete Position, und
- mechanische Verbindung des zweiten Befestigungsabschnitts (32) des ersten Verbindungsstücks (16) an der zweiten Komponente (14) und elektrische Verbindung des zweiten Befestigungsabschnitts (32) des ersten Verbindungsstücks (16) mit dem elektrischen Verbindungsanschluss (28) der zweiten Komponente (14).

## Claims

1. An interconnect assembly (10, 100, 200) comprising:
- a first component (12) and a second component (14), the first component (12) being an electrochemical cell (18) or a battery module comprising at least one electrochemical cell (18), the first component (12) and the second component (14) each comprising at least one electrical connection terminal (28), the electrical connection terminal (28) of the first component (12) and the electrical connection terminal (28) of the second component (14) being spaced apart in a connecting direction (X-X'),
- a first connection piece (16) comprising:
- a first fastening portion (30) mechanically connected to the first component (12) and electrically connected to the electrical connection terminal (28) of the first component (12),
- a second fastening portion (32), and
- a connection portion (34) mechanically and electrically connecting the first fastening portion (30) and the second fastening portion (32),
**characterised in that** the connection portion (34) of the first connection piece (16) is more flexible than the first fastening portion (30) and than the second fastening portion (32) in bending about a transverse direction (Y-Y') perpendicular to the connecting direction (X-X'), the first fastening portion (30) being movable relative to the first component(12) between a folded position and an unfolded position by folding, or conversely unfolding, the connection portion (34) about the transverse direction (Y-Y'),
the second fastening portion (32) extending in the extension of the first fastening portion (30) in the connecting direction (X-X') in the unfolded position, the second fastening portion (32) being adapted to be connected mechanically to the second component (14) and electrically to the electrical connection terminal (28) of the second component (14),
the second fastening portion (32) extending on the side of the first fastening portion (30) relative to the connection portion (34) in the connecting direction (X-X') in the folded position, the second fastening portion (32) being mechanically disconnected from the second component (14) and electrically disconnected from the electrical connection terminal (28) of the second component (14).

2. The interconnect assembly (10, 100, 200) according to claim 1, wherein the connection portion (34), the first fastening portion (30) and the second fastening portion (32) are integral.

3. The interconnect assembly (10, 100, 200) according to claim 1 or 2, wherein, in the unfolded position, the second fastening portion (32) is releasably mechanically connected to the second component (14).

4. The interconnect assembly (10, 100, 200) according to any one of the preceding claims, wherein the second fastening portion (32) defines an fastening hole (48) and comprises a screw (50) received in the fastening hole (48) for mechanically connecting the second fastening portion (32) to the second component (14).

5. The interconnect assembly (10, 100, 200) according to any one of the preceding claims, wherein the first fastening portion (30) is soldered to the first component (12).

6. The interconnect assembly (10, 100, 200) according to any one of the preceding claims, wherein the connection portion (34) is delimited by two transverse folds (52), each of the two transverse folds (52) connecting the connection portion (34) with the first fastening portion (30) and the second fastening portion (32) respectively.

7. The interconnect assembly (10, 100, 200) according to claim 4, wherein, in the unfolded position, the connection portion (34) has an arcuate shape between the two transverse folds (52).

8. The interconnect assembly (10, 100, 200) according to any of the preceding claims, wherein the connection portion (34) has a thickness less than the thickness of each of the first fastening portion (30) and the second fastening portion (32).

9. The interconnect assembly (10, 100, 200) according to any one of the preceding claims, wherein the first connection piece (16) comprises a stack of a plurality of layers (54), the layers (54) being fastened to one another in each of the first securing portion (30) and the second fastening portion (32) and the layers (54) being free to slide relative to one another in the connection portion (34).

10. The interconnect assembly (10, 100, 200) according to any one of the preceding claims, in which the first connection piece (16) is composed of a material having an electrical conductivity *σ* equal to or greater than 7.10⁶ S.m⁻¹, preferably aluminium or copper.

11. The interconnect assembly (100, 200) according to any one of the preceding claims, wherein the second component (14) is an electrochemical cell, a battery module comprising one or more electrochemical cells, a connection bar or an electronic battery control card.

12. The interconnect assembly (200) according to any one of the preceding claims, wherein the second component (14) further comprises an interface piece (202) and a second connection piece (204), said second connection piece (204) comprising a first fastening portion (206) mechanically connected to the second component (14) and electrically connected to the electrical connection terminal (28) of the second component (14) and a second fastening portion (208) mechanically and electrically connected to the interface piece (202), the interface piece (202) of the second component (14) being able to be mechanically and electrically connected to the second fastening portion (32) of the first connection piece (16) in the unfolded position.

13. An electrical connection method comprising at least the following steps:
- supplying an interconnect assembly (10, 100, 200) according to any one of the preceding claims, the first connection piece (16) being in the folded position,
- moving the first connection piece (16) from the folded position to the unfolded position, and
- mechanically connecting the second fastening portion (32) of the first connection piece (16) to the second component (14) and electrically connecting the second fastening portion (32) of the first connection piece (16) to the electrical connection terminal (28) of the second component (14).
